(19) Europäisches Patentamt / European Patent Office / Office européen des brevets

(11) **EP 4 478 219 A1**

(12) **DEMANDE DE BREVET EUROPEEN**

(43) Date de publication:
**18.12.2024 Bulletin 2024/51**

(21) Numéro de dépôt: **24180427.7**

(22) Date de dépôt: **06.06.2024**

(51) Classification Internationale des Brevets (IPC):
**G06F 18/2113** (2023.01)  **G06F 18/2135** (2023.01)
**G06F 18/22** (2023.01)  **G06F 18/2433** (2023.01)

(52) Classification Coopérative des Brevets (CPC):
**G06F 18/2433; G06F 18/2113; G06F 18/2135; G06F 18/22**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **14.06.2023 FR 2306065**

(71) Demandeur: **STMicroelectronics International N.V.**
**1228 Plan-les-Ouates, Geneva (CH)**

(72) Inventeurs:
• **MOUSSA, Mohamed-Ali**
**83000 Toulon (FR)**
• **DE ROCHEBOUET, François**
**83000 Toulon (FR)**

(74) Mandataire: **Casalonga**
**Casalonga & Partners**
**Bayerstraße 71/73**
**80335 München (DE)**

(54) **PROCÉDÉ DE DÉTECTION D'ANOMALIES DANS UN SYSTÈME PHYSIQUE**

(57)  Selon un aspect, il est proposé un procédé mis en oeuvre par ordinateur de génération d'un modèle de détection d'anomalies dans un système, le procédé comprenant :
- une obtention (10) d'une matrice de données d'apprentissage correspondant à un fonctionnement normal dudit système,
- une décomposition en valeurs singulières (11) de ladite matrice de données d'apprentissage,
- un calcul (12) d'une nouvelle base (V'),
- un définition (16) d'un seuil maximal de distance de Mahalanobis représentatif d'une limite du fonctionnement normal dudit système,
- une définition d'un modèle (MDL) de détection d'anomalies à partir de ladite nouvelle base (V') et dudit seuil maximal de distance de Mahalanobis (MTS).

[Fig. 1]

EP 4 478 219 A1

**Description**

Des modes de réalisation et de mise en oeuvre concernent la détection de valeurs aberrantes dans une matrice de données.

La détection d'anomalies (en anglais « outlier détection » ou « anomaly détection ») est une technique utilisée pour identifier des données qui diffèrent significativement des autres données. Ces données différentes sont souvent appelées "anomalies" ou "valeurs aberrantes".

La détection d'anomalies trouve un intérêt dans de nombreuses applications. Certaines applications utilisent des microcontrôleurs qui peuvent être configurés pour réaliser une détection d'anomalie.

La détection d'anomalies implémentée par un microcontrôleur permet de réaliser une surveillance en temps réel pour détecter des comportements anormaux dans un système physique à partir de données acquises par au moins un capteur de ce système. Cette technique peut être utilisée dans une variété de domaines tels que l'automobile, l'aérospatiale, l'énergie, la production manufacturière, la surveillance de la santé et bien d'autres.

Il existe plusieurs techniques de détection d'anomalies. Certaines méthodes sont basées sur l'apprentissage automatique. Ces méthodes utilisent des algorithmes d'apprentissage automatique pour identifier les données qui ne correspondent pas au modèle appris.

Dans le cadre de la détection d'anomalies, un microcontrôleur utilise généralement un modèle qui représente le comportement normal d'un système pour analyser des données collectées par au moins un capteur du système.

En particulier, le modèle est utilisé pour comparer les données actuelles collectées par ledit au moins un capteur à celles du comportement normal. Si les données actuelles diffèrent trop de celles attendues, cela peut indiquer une anomalie ou un dysfonctionnement dans le système. Dans ce cas, une alerte peut être déclenchée pour avertir un opérateur du système.

La détection d'anomalies implémentée permet donc de prévenir des pannes et des défaillances du système. Cela permet d'améliorer la fiabilité et la sécurité du système.

Le modèle utilisé pour réaliser la détection d'anomalies peut être obtenu à partir d'un algorithme d'apprentissage automatique. Un serveur informatique peut être utilisé pour implémenter l'algorithme d'apprentissage automatique permettant d'obtenir le modèle.

En particulier, l'algorithme d'apprentissage automatique est configuré pour générer un modèle pour la détection d'anomalies à partir de données représentatives d'un comportant normal d'un système. L'utilisation d'un tel algorithme d'apprentissage automatique présente l'avantage d'éviter de fournir des données aberrantes à l'algorithme d'apprentissage automatique pour générer ledit modèle. En effet, il peut être difficile et coûteux de générer intentionnellement des anomalies dans un système pour obtenir des données aberrantes.

Les modèles connus pouvant être générés par de tels algorithmes d'apprentissage automatique présentent généralement l'inconvénient de comporter de nombreux paramètres qui impliquent un traitement relativement complexe des données par le microcontrôleur et une occupation importante d'une mémoire du microcontrôleur.

Il existe donc un besoin de proposer une solution permettant d'obtenir un modèle pour la détection d'anomalies qui soit simple à mettre en oeuvre par un microcontrôleur.

Selon un aspect, il est proposé un procédé mis en oeuvre par ordinateur de génération d'un modèle de détection d'anomalies dans un système physique, le procédé comprenant :

- une obtention d'une matrice de données d'apprentissage correspondant à un fonctionnement normal dudit système,
- une décomposition en valeurs singulières de ladite matrice de données d'apprentissage, de manière à obtenir une matrice orthogonale d'entrée, une matrice diagonale et une matrice orthogonale de sortie,
- une détermination d'un rang de la matrice de données d'apprentissage ayant une énergie supérieure à un seuil à partir de la matrice diagonale,
- un calcul d'une nouvelle base formée de colonnes de la matrice orthogonales d'entrée sélectionnées en fonction du rang déterminé,
- un définition d'un seuil maximal de distance de Mahalanobis représentatif d'une limite du fonctionnement normal dudit système,
- une définition d'un modèle de détection d'anomalies à partir de ladite nouvelle base et dudit seuil maximal de distance de Mahalanobis.

Un tel procédé utilise une décomposition en valeurs singulières et un seuil maximal de distance de Mahalanobis pour définir le modèle de détection d'anomalies. La décomposition en valeurs singulières permet d'obtenir un modèle de détection d'anomalies robuste au bruit et aux perturbations.

La décomposition en valeurs singulière permet également d'obtenir systématiquement une matrice inversible des données d'apprentissage projetées. Il est ainsi toujours possible de calculer une distance de Mahalanobis à partir de cette matrice inversible.

Le modèle obtenu peut ensuite être intégré dans un microcontrôleur dudit système afin de réaliser une détection d'anomalies au cours du fonctionnement de ce système. Un tel modèle présente l'avantage d'occuper un espace mémoire relativement faible.

Dans un mode de mise en oeuvre avantageux, la définition dudit seuil maximal de distance de Mahalanobis comprend :

- une projection des données d'apprentissage sur la nouvelle base,

- un calcul d'une distance de Mahalanobis pour chacune desdites données d'apprentissage,
- une définition dudit seuil maximal de distance de Mahalanobis à partir des distances de Mahalanobis calculées.

Avantageusement, le procédé comprend en outre un calcul d'une matrice de covariance et d'une matrice de précision à partir des données d'apprentissage projetées et d'une moyenne des données d'apprentissage projetées, ledit calcul de la distance de Mahalanobis étant effectué à partir des données d'apprentissage projetées, de la matrice de précision et de la moyenne calculées, et dans lequel le modèle de détection d'anomalies défini comprend en outre ladite matrice de précision et ladite moyenne.

En variante, la définition dudit seuil maximal de distance de Mahalanobis comprend une définition dudit seuil maximal de distance de Mahalanobis à partir d'une table de khi-carré.

En variante, dans un mode de mise en oeuvre avantageux, le procédé comprend en outre une transformation de ladite nouvelle base, cette transformation étant adaptée pour standardiser lesdites données d'apprentissage projetées, le modèle de détection d'anomalies comprenant alors la nouvelle base transformée et le seuil maximal de distance de Mahalanobis.

Cette transformation permet d'éviter de stocker la matrice de précision dans le modèle de détection d'anomalies puisque la matrice de précision correspond alors à la matrice identité. Ainsi, le modèle de détection d'anomalies comprend uniquement la nouvelle base transformée et le seuil maximal de distance de Mahalanobis.

Selon un autre aspect, il est proposé un procédé mis en oeuvre par ordinateur de détection d'anomalie dans un système comprenant :

- une obtention d'un modèle de détection d'anomalies généré à partir d'un procédé de génération tel que décrit précédemment à partir de données d'apprentissage correspondant à un fonctionnement normal dudit système,
- une obtention de données représentatives du fonctionnement dudit système,
- une projection des données représentatives du fonctionnement dudit système sur la base dudit modèle de détection d'anomalies,
- un calcul d'une distance de Mahalanobis à partir desdites données projetées,
- une comparaison de la distance de Mahalanobis calculée au seuil maximal de distance de Mahalanobis défini dans ledit modèle de détection d'anomalies,
- une détection d'anomalies si la distance de Mahalanobis calculée est supérieure au seuil maximal de distance de Mahalanobis.

Un tel procédé présente l'avantage de pouvoir être exécuté par un microcontrôleur. En effet, ce dernier exécute uniquement deux opérations qui sont la projection des données représentatives du fonctionnement du système sur ladite base du modèle et le calcul de ladite distance de Mahalanobis.

Avantageusement, ledit calcul de la distance de Mahalanobis est effectué à partir des données projetées, de la matrice de précision et de la moyenne dudit modèle de détection d'anomalies.

Selon un autre aspect, il est proposé un produit programme d'ordinateur comprenant des instructions qui, lorsque le programme est exécuté par un ordinateur, conduisent celui-ci à mettre en oeuvre un procédé de génération de modèle de détection d'anomalies tel que décrit précédemment.

Selon un autre aspect, il est proposé un produit programme d'ordinateur comprenant des instructions qui, lorsque le programme est exécuté par un ordinateur, conduisent celui-ci à mettre en oeuvre un procédé de détection d'anomalies tel que décrit précédemment.

Selon un autre aspect, il est proposé un microcontrôleur comprenant :

- une mémoire dans laquelle est enregistré un programme d'ordinateur pour la détection d'anomalies tel que décrit précédemment,
- une unité de traitement configurée pour exécuter ce programme d'ordinateur.

D'autres avantages et caractéristiques de l'invention apparaîtront à l'examen de la description détaillée de modes de réalisation, nullement limitatifs, et des dessins annexés sur lesquels :

  [Fig 1]
  [Fig 2]
  [Fig 3]

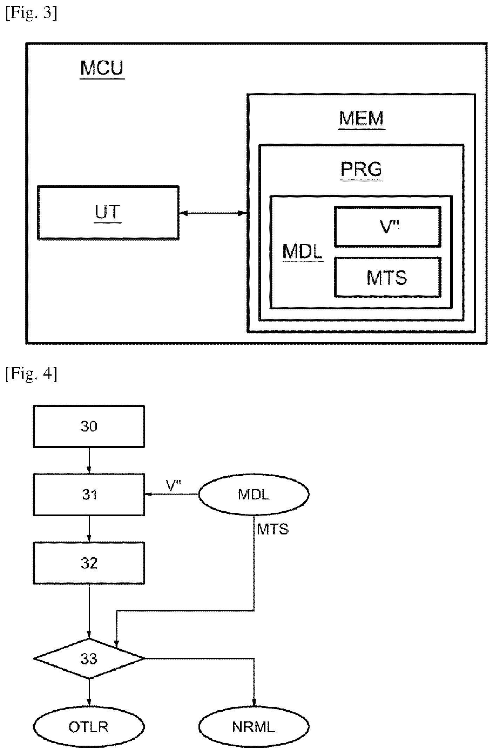

  [Fig 4] illustrent des modes de réalisation et de mise en oeuvre de l'invention.

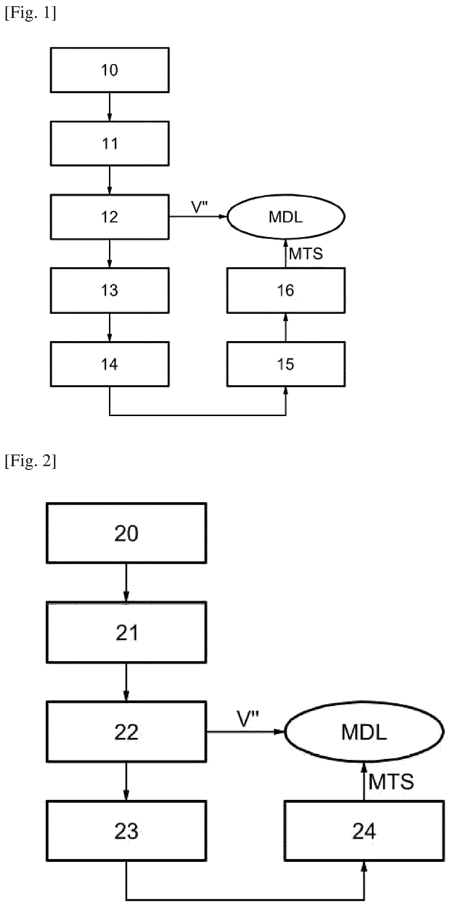

La figure 1 illustre premier mode de mise en oeuvre d'un procédé de génération d'un modèle de détection d'anomalie. Ce procédé de génération d'un modèle de détection d'anomalie est mis en oeuvre par ordinateur.

Un tel procédé est utilisé pour définir un modèle déterminant des limites d'un comportement normal d'un système physique.

En particulier, un tel procédé peut être mis en oeuvre par un serveur informatique. Le serveur comporte alors une mémoire dans laquelle est stockée un programme d'ordinateur comprenant des instructions, qui lorsqu'elles sont mises en oeuvre par le serveur conduisent celui-ci à exécuter ledit procédé de génération.

Le procédé comprend une étape 10 d'obtention de données d'apprentissage. Dans cette étape 10, des données d'apprentissage sont fournies au serveur. Les données d'apprentissage sont des données représentatives d'un comportement normal d'un système physique. Ces données peuvent par exemple être acquises par au moins un capteur de ce système lors d'un fonctionnement normal du système.

Les données d'apprentissage sont regroupées dans une matrice X. La matrice X présente par exemple une taille mxn.

Le procédé comprend ensuite une étape 11 de mise en oeuvre d'une décomposition en valeurs singulières. Dans cette étape 11, le serveur procède à une décomposition en valeurs singulières de la matrice X. Cette étape 11 permet de factoriser la matrice X de données d'apprentissage en trois matrices U, $\Sigma$ et V. En particulier, les matrices U, $\Sigma$ et V sont définies de sorte que la matrice X corresponde au produit matriciel $U\Sigma V^T$. La matrice U est alors une matrice orthogonale de taille m x m. La matrice $\Sigma$ est une matrice diagonale de taille m x n contenant les valeurs singulières de la matrice X (c'est-à-dire les racines carrées des valeurs propres de la matrice $X^TX$ ou $XX^T$), et V est une matrice orthogonale de taille n x n.

La matrice V contient une matrice de vecteurs de base orthonormés de $K^n$, dits « d'entrée ». La matrice V est donc une matrice orthonormée d'entrée.

La matrice U contient une matrice de vecteurs de base orthonormés de $K^m$, dits « de sortie ». La matrice U est donc une matrice orthonormée de sortie.

Cette décomposition en valeurs singulières permet de réduire la dimensionnalité de la matrice X de données d'apprentissage tout en préservant les propriétés importantes de la matrice X. La décomposition en valeurs singulières permet donc de compresser la matrice X et de réduire son occupation de la mémoire en gardant uniquement les vecteurs qui correspondent aux valeurs singulières les plus importantes.

Le procédé comprend ensuite une étape 12 de calcul d'une nouvelle base. Dans cette étape 12, le serveur calcule une nouvelle base V' à partir de la matrice $\Sigma$ obtenue grâce à la décomposition en valeurs singulières.

En particulier, l'étape 12 de calcul de la nouvelle base V' comprend une détermination d'un rang de la matrice de données d'apprentissage qui comporte une énergie correspondant à un seuil d'énergie prédéfini. Plus, particulièrement, l'énergie totale de la matrice de données d'apprentissage correspond à la somme des carrés des valeurs singulières de cette matrice, les valeurs singulières étant contenues dans la matrice diagonale $\Sigma$ obtenue par la décomposition en valeurs singulières. Le rang déterminé à cette étape 12 correspond au rang de la matrice de données d'apprentissage qui comporte une énergie atteignant le seuil d'énergie prédéfini (c'est-à-dire le nombre de valeurs singulières permettant d'atteindre ce seuil d'énergie). Le seuil d'énergie peut correspondre à un pourcentage prédéfini par rapport à l'énergie totale de la matrice de données d'apprentissage.

L'étape 12 de calcul de la nouvelle base comprend une sélection des colonnes de la matrice V qui correspondent au rang déterminé de la matrice de données d'apprentissage. Les colonnes de la matrices V forment alors une nouvelle base V'. Cette nouvelle base V' permet de conserver uniquement les colonnes de la base V correspondant aux valeurs singulières les plus importantes (c'est-à-dire celles qui contribuent le plus à l'énergie totale de la matrice).

Le procédé comprend ensuite une étape 13 de projection. Dans cette étape 13, le serveur projette les données d'apprentissage sur la nouvelle base V'. La projection correspond à un produit matriciel entre les données d'apprentissage et la nouvelle base V'.

Le serveur obtient ainsi une matrice de ladite projection. Cette matrice de ladite projection est systématiquement une matrice inversible.

Le procédé comprend ensuite une étape 14 de transformation. Dans cette étape 14 de transformation, le serveur met en oeuvre un algorithme permettant de standardiser les données de la matrice de ladite projection. Cette étape 14 permet de calculer une base transformée V''. En particulier, la base transformée V'' peut être obtenue selon l'expression suivante :

$$V'' = \frac{1}{\sqrt{n-1}} \times S' \times V'$$

, où n représente le nombre de lignes dans la matrice d'apprentissage, V' est la nouvelle base et S' est une matrice diagonale tronquée de la décomposition en valeurs singulières.

Cette étape 14 permet d'obtenir une matrice centrée et de variance unitaire à partir de la matrice de ladite projection. La matrice obtenue est centrée autour de zéro. Cette transformation permet d'obtenir une matrice de précision correspondant à une matrice identité.

Le procédé comprend ensuite une étape 15 de calcul de distances de Mahalanobis. Dans cette étape 15, le serveur calcule une distance de Mahalanobis pour chacune desdites données d'apprentissage. Chaque distance de Mahalanobis peut être calculée car la matrice de covariance qui correspond à ladite projection est systématiquement inversible, du fait de la décomposition en valeurs singulières et la prise en compte que des composantes ayant une valeur singulière importante.

En particulier, la distance de Mahalanobis est calculée en utilisant la formule :

$$D_M(x) = \sqrt{(x-\mu)^T \Sigma^{-1} (x-\mu)}$$

où x est un vecteur qui correspond à une donnée projetée, $\mu$ est un vecteur qui correspond à une moyenne des données d'apprentissage projetées , et $\Sigma^{-1}$ correspond à la matrice de précision (c'est-à-dire l'inverse de la matrice de covariance).

En appliquant l'étape 14, la distance de Mahalanobis se réduit à la distance euclidienne. On peut l'exprimer comme suit : $D_M(x) =$ $\sqrt{(x-\mu)^T (x-\mu)}$

où x est un vecteur qui correspond à une donnée projetée et standardisée, μ est un vecteur qui correspond à une moyenne des données d'apprentissage projetées et standardisées.

Le procédé comprend ensuite une étape 16 de définition d'un seuil maximal de distance de Mahalanobis. Dans cette étape, le serveur définit un seuil maximal de distance de Mahalanobis. Ce seuil maximal de distance de Mahalanobis représente une limite d'un comportement normal du système. Par exemple, le seuil maximal est défini comme une distance qui est supérieure à la distance de Mahalanobis associée à 98% des données normales projetées sur la base V' et standardisées.

Un modèle de détection d'anomalies est alors défini. Ce modèle de détection d'anomalies comporte la base V', la matrice de précision et le seuil maximal de distance de Mahalanobis. En variante, le modèle de détection comporte uniquement le base V" transformée et le seuil maximal de distance de Mahalanobis en utilisant l'étape 14 car la matrice de précision est alors la matrice identité qui est connue et ne nécessite donc pas d'être mémorisée.

Ce modèle de détection d'anomalies est ensuite intégré dans un microcontrôleur du système. En particulier, le modèle de détection d'anomalies est stocké dans une mémoire du microcontrôleur. Un tel modèle de détection présente l'avantage d'occuper relativement peu d'espace dans la mémoire du microcontrôleur.

La figure 2 illustre un deuxième mode de mise en oeuvre d'un procédé de génération d'un modèle de détection d'anomalie.

Un tel procédé est utilisé pour définir un modèle déterminant des limites d'un comportement normal d'un système physique.

En particulier, un tel procédé peut être mis en oeuvre par un serveur informatique. Le serveur comporte alors une mémoire dans laquelle est stockée un programme d'ordinateur comprenant des instructions, qui lorsqu'elles sont mises en oeuvre par le serveur conduisent celui-ci à exécuter ledit procédé de génération.

Le procédé comprend une étape 20 d'obtention de données d'apprentissage. Dans cette étape 20, des données d'apprentissage sont fournies au serveur. Les données d'apprentissage sont des données représentatives d'un comportement normal d'un système. Ces données peuvent par exemple être acquises par au moins un capteur de ce système lors d'un fonctionnement normal du système.

Les données d'apprentissage sont regroupées dans une matrice X. La matrice X présente par exemple une taille mxn.

Le procédé comprend ensuite une étape 21 de mise en oeuvre d'une décomposition en valeurs singulières. Dans cette étape 21, le serveur procède à une décomposition en valeurs singulières de la matrice X. Cette étape 21 permet de factoriser la matrice X de données d'apprentissage en trois matrices U, Σ et V. En particulier, les matrices U, Σ et V sont définies de sorte que la matrice X corresponde au produit matriciel UΣV^T. La matrice U est alors une matrice orthogonale de taille m x m. La matrice Σ est une matrice diagonale de taille m x n contenant les valeurs singulières de la matrice X (c'est-à-dire les racines carrées des valeurs propres de la matrice X^TX ou XX^T), et V est une matrice orthogonale de taille n x n.

La matrice V contient une matrice de vecteurs de base orthonormés de K^n, dits « d'entrée ». La matrice V est donc une matrice orthonormée d'entrée.

La matrice U contient une matrice de vecteurs de base orthonormés de K^m, dits « de sortie ». La matrice U est donc une matrice orthonormée de sortie.

Cette décomposition en valeurs singulières permet de réduire la dimensionnalité de la matrice X de données d'apprentissage tout en préservant les propriétés importantes de la matrice X. La décomposition en valeurs singulières permet donc de compresser la matrice X et de réduire son occupation de la mémoire en gardant uniquement les vecteurs qui correspondent aux valeurs singulières les plus importantes.

Le procédé comprend ensuite une étape 22 de calcul d'une nouvelle base V'. Dans cette étape 22, le serveur calcule une nouvelle base V' à partir de la matrice Σ obtenue grâce à la décomposition en valeurs singulières.

En particulier, l'étape 22 de calcul de la nouvelle base V' comprend une détermination d'un rang de la matrice de données d'apprentissage qui comporte une énergie correspondant à seuil d'énergie prédéfini.

L'étape 22 de calcul de la nouvelle base comprend une sélection des colonnes de la matrice V qui correspondent au rang déterminé de la matrice de données d'apprentissage. Les colonnes de la matrices V forment alors une nouvelle base V'.

Le procédé comprend ensuite une étape 23 de transformation. Cette étape 23 permet de calculer une base transformée V". En particulier, la base transformée V" correspond à l'expression suivante :

$$V'' = \frac{1}{\sqrt{n-1}} \times S' \times V'$$

, où n représente le nombre de lignes dans la matrice d'apprentissage, V' est la nouvelle base et S' est une matrice diagonale tronquée de la décomposition en valeurs singulières.

Le procédé comprend ensuite une étape 24 de définition d'un seuil maximal de distance de Mahalanobis. Dans cette étape, le serveur définit un seuil maximal de distance de Mahalanobis. Ce seuil maximal de distance de Mahalanobis représente une limite d'un comportement normal du système. Dans ce mode de réalisation, le seuil maximal de distance de Mahalanobis est défini à partir d'une table de khi-carré. En effet, la distance de Mahalanobis suit la loi khi carré. Il est ainsi possible de définir le seuil maximal de distance de Mahalanobis à partir d'une telle table.

Un modèle de détection d'anomalies est alors défini. Ce modèle de détection d'anomalies comporte la base V', la matrice de précision et le seuil maximal de distance de Mahalanobis. En variante, le modèle de détection comporte uniquement le base V" transformée et le seuil maximal de distance de Mahalanobis en utilisant l'étape 23 car la matrice de précision est alors la matrice identité qui est connue et ne nécessite donc pas d'être mémorisée.

Ce modèle de détection d'anomalies est enfin intégré dans un microcontrôleur du système. En particulier, le modèle de détection d'anomalies est stocké dans une mémoire du microcontrôleur. Un tel modèle de détection présente l'avantage d'occuper relativement peu d'espace dans la mémoire du microcontrôleur

La figure 3 illustre un microcontrôleur MCU configuré pour mettre en oeuvre un procédé de détection d'anomalies dans une matrice de données. Un tel procédé est décrit dans la suite en relation avec la figure 4.

Le microcontrôleur MCU comprend une unité de traitement UT et une mémoire MEM. La mémoire MEM comprend un programme d'ordinateur PRG comprenant des instructions qui, lorsqu'elles sont mises en oeuvre par l'unité de traitement UT du microcontrôleur conduisent celle-ci à mettre en oeuvre ledit procédé de détection d'anomalies.

Le programme d'ordinateur PRG comporte ledit modèle MDL défini par le procédé de génération de modèle décrit précédemment. En particulier, le modèle MDL comprend ladite nouvelle base transformée V" et ledit seuil maximal MTS de distance de Mahalanobis du modèle de détection d'anomalies. En variante, le modèle MDL peut comprendre la nouvelle base V', la matrice de précision et le seuil maximal de distance de Mahalanobis.

Le microcontrôleur peut être intégré dans un système pour lequel une surveillance d'anomalies de fonctionnement est requise. Le microcontrôleur peut être configuré pour recevoir des données acquises par un capteur dudit système. Ces données acquises sont alors représentatives du fonctionnement du système.

La figure 4 illustre un procédé mis en oeuvre par ledit microcontrôleur pour effectuer une détection d'anomalies dans une matrice de données représentative d'un fonctionnement d'un système.

Le procédé comprend une étape 30 d'obtention d'une matrice de données à analyser. Dans cette étape 30, le microcontrôleur obtient un vecteur de données à analyser. Ces données à analyser peuvent être obtenues à partir d'un capteur dudit système.

Le procédé comprend ensuite une étape 31 de projection. Dans cette étape 31, les données à analyser sont projetées sur la base transformée V" du modèle de détection d'anomalie stockée en mémoire du microcontrôleur. La projection correspond à un produit matriciel entre les données à analyser et la base transformée V".

Cette projection des données à analyser permet d'obtenir un vecteur de données projetées.

Le procédé comprend ensuite une étape 32 de calcul de distance de Mahalanobis. Dans cette étape 32, le microcontrôleur calcule une distance de Mahalanobis à partir des données projetées et standardisées.

Le procédé comprend ensuite une étape 33 de détermination de la présence d'anomalies dans la matrice de données. Dans cette étape 34, le microcontrôleur compare la valeur de la distance de Mahalanobis calculée au seuil maximal stocké en mémoire du microcontrôleur.

Si la valeur de la distance de Mahalanobis calculée est inférieure au seuil maximal, alors le microcontrôleur considère que le vecteur de données est représentatif d'un comportement normal du système (état NRML sur la figure 3).

Si la valeur de la distance de Mahalanobis calculée est supérieure au seuil maximal, alors le microcontrôleur considère que le vecteur de données est représentatif d'une présence d'anomalies dans le comportement du système (état OTLR sur la figure 3). Dans ce cas, le microcontrôleur peut générer un signal d'alerte pour informer l'utilisateur du système d'un dysfonctionnement du système.

Bien entendu, la présente invention est susceptible de diverses variantes et modifications qui apparaîtront à l'homme de l'art. Par exemple, à la place de réaliser une transformation pour standardiser la projection des données d'apprentissage sur la base, le procédé de génération de modèle de détection d'anomalies peut comprendre un calcul d'une matrice de covariance, d'une matrice de précision (c'est-à-dire l'inverse de la matrice de covariance) et d'une moyenne à partir de la projection des données d'apprentissage sur la nouvelle base V'. La distance de Mahalanobis calculée dans ce procédé de génération est alors obtenue en utilisant cette matrice de précision et la moyenne calculée. Le modèle de détection généré comprend alors également cette matrice de précision et la moyenne calculée. Dans ce cas, le procédé de détection d'anomalies comprend un calcul de la distance de Mahalanobis en utilisant cette matrice de précision et la moyenne stockée.

Néanmoins, la projection de données sur la base transformée permet de ne pas calculer la matrice de précision car cette dernière correspond à la matrice identité dans ce cas. Cette transformation permet alors également d'éviter de stocker la matrice de précision dans le microcontrôleur.

## Revendications

1. Procédé mis en oeuvre par ordinateur de génération d'un modèle de détection d'anomalies dans un système physique, le procédé comprenant :

   - une obtention (10, 20) d'une matrice de données d'apprentissage correspondant à un fonctionnement normal dudit système,
   - une décomposition en valeurs singulières (11, 21) de ladite matrice de données d'apprentissage, de manière à obtenir une matrice orthogonale d'entrée, une matrice diagonale et une matrice orthogonale de sortie,
- une détermination d'un rang de la matrice de données d'apprentissage ayant une énergie supérieure à un seuil à partir de la matrice diagonale,
- un calcul (12, 22) d'une nouvelle base (V') formée de colonnes de la matrice orthogonales d'entrée sélectionnées en fonction du rang déterminé,
- un définition (16, 24) d'un seuil maximal de distance de Mahalanobis représentatif d'une limite du fonctionnement normal dudit système,
- une définition d'un modèle (MDL) de détection d'anomalies à partir de ladite nouvelle base (V') et dudit seuil maximal de distance de Mahalanobis (MTS).

2. Procédé selon la revendication 1, dans lequel la définition dudit seuil maximal de distance de Mahalanobis comprend :

   - une projection (13) des données d'apprentissage sur la nouvelle base,
   - un calcul (15) d'une distance de Mahalanobis pour chacune desdites données d'apprentissage,
   - une définition dudit seuil maximal de distance de Mahalanobis à partir des distances de Mahalanobis calculées.

3. Procédé selon la revendication 2, comprenant en outre un calcul d'une matrice de covariance et d'une matrice de précision à partir des données d'apprentissage projetées et d'une moyenne des données d'apprentissage projetées, ledit calcul de la distance de Mahalanobis étant effectué à partir des données d'apprentissage projetées, de la matrice de précision et de la moyenne calculées, et dans lequel le modèle de détection d'anomalies défini comprend en outre ladite matrice de précision et ladite moyenne.

4. Procédé selon la revendication 1, dans lequel la définition (24) dudit seuil maximal de distance de Mahalanobis comprend une définition dudit seuil maximal de distance de Mahalanobis à partir d'une table de khi-carré.

5. Procédé selon l'une des revendications 1 à 4, comprenant en outre une transformation (14, 23) de ladite nouvelle base, cette transformation étant adaptée pour standardiser des données d'apprentissage projetées sur la nouvelle base, le modèle de détection d'anomalies comprenant alors la nouvelle base transformée et le seuil maximal de distance de Mahalanobis.

6. Procédé mis en oeuvre par ordinateur de détection d'anomalie dans un système comprenant :

   - une obtention d'un modèle de détection d'anomalies généré à partir d'un procédé de génération selon l'une des revendications 1 à 5 à partir de données d'apprentissage correspondant à un fonctionnement normal dudit système,
   - une obtention (30) de données représentatives du fonctionnement dudit système,
   - une projection (31) des données représentatives du fonctionnement dudit système sur la base dudit modèle de détection d'anomalies,
   - un calcul (33) d'une distance de Mahalanobis à partir desdites données projetées,
   - une comparaison (34) de la distance de Mahalanobis calculée au seuil maximal de distance de Mahalanobis défini dans ledit modèle de détection d'anomalies,
   - une détection d'anomalies si la distance de Mahalanobis calculée est supérieure au seuil maximal de distance de Mahalanobis.

7. Procédé selon la revendication 6, dans lequel ledit calcul de la distance de Mahalanobis est effectué à partir des données projetées, de la matrice de précision et de la moyenne dudit modèle de détection d'anomalies.

8. Produit programme d'ordinateur comprenant des instructions qui, lorsque le programme est exécuté par un ordinateur, conduisent celui-ci à mettre en oeuvre un procédé selon l'une des revendications 1 à 5.

9. Produit programme d'ordinateur comprenant des instructions qui, lorsque le programme est exécuté par un ordinateur, conduisent celui-ci à mettre en oeuvre un procédé selon l'une des revendications 6 et 7.

10. Microcontrôleur comprenant :

    - une mémoire (MEM) dans laquelle est enregistré un programme d'ordinateur (PRG) selon la revendication 9,
    - une unité de traitement (UT) configurée pour exécuter ce programme d'ordinateur (PRG).

[Fig. 1]

```
        ┌──────────┐
        │    10    │
        └──────────┘
             │
             ▼
        ┌──────────┐
        │    11    │
        └──────────┘
             │
             ▼
        ┌──────────┐   V"        ╭─────────╮
        │    12    │─────────────▶│   MDL   │
        └──────────┘              ╰─────────╯
             │                         ▲
             ▼                         │ MTS
        ┌──────────┐            ┌──────────┐
        │    13    │            │    16    │
        └──────────┘            └──────────┘
             │                       ▲
             ▼                       │
        ┌──────────┐            ┌──────────┐
        │    14    │            │    15    │
        └──────────┘            └──────────┘
             │                       ▲
             └───────────────────────┘
```

[Fig. 2]

```
        ┌──────────┐
        │    20    │
        └──────────┘
             │
             ▼
        ┌──────────┐
        │    21    │
        └──────────┘
             │
             ▼
        ┌──────────┐   V"        ╭─────────╮
        │    22    │─────────────▶│   MDL   │
        └──────────┘              ╰─────────╯
             │                         ▲
             ▼                         │ MTS
        ┌──────────┐            ┌──────────┐
        │    23    │            │    24    │
        └──────────┘            └──────────┘
             │                       ▲
             └───────────────────────┘
```

[Fig. 3]

MCU

MEM

PRG

UT

MDL

V"

MTS

[Fig. 4]

30

↓

31 ←V"— MDL

↓ │MTS

32 │

↓ │

33

↓ ↓

OTLR    NRML

Europäisches
Patentamt

European
Patent Office

Office européen
des brevets

**RAPPORT DE RECHERCHE EUROPEENNE**

Numéro de la demande

EP 24 18 0427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SHASHANKA MADHU ET AL: "User and entity behavior analytics for enterprise security", 2016 IEEE INTERNATIONAL CONFERENCE ON BIG DATA (BIG DATA), IEEE, 5 décembre 2016 (2016-12-05), pages 1867-1874, XP033056626, DOI: 10.1109/BIGDATA.2016.7840805 * sections I-IV; page 1867 - page 1873 * | 1-10 | INV. G06F18/2113 G06F18/2135 G06F18/22 G06F18/2433 |
| | ----- | | |
| X | US 2022/159021 A1 (KWON MINHAE [KR] ET AL) 19 mai 2022 (2022-05-19) * alinéa [0007] - alinéa [0017] * * alinéa [0027] - alinéa [0078] * | 1-10 | |
| | ----- | | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| La Haye | 12 septembre 2024 | Chehade, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 0427

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-09-2024

| Document brevet cité au rapport de recherche | Date de publication | Membre(s) de la famille de brevet(s) | Date de publication |
|---|---|---|---|
| US 2022159021 A1 | 19-05-2022 | KR 20220067897 A | 25-05-2022 |
|  |  | US 2022159021 A1 | 19-05-2022 |

Pour tout renseignement concernant cette annexe : voir Journal Officiel de l'Office européen des brevets, No.12/82